# EUROPÄISCHE PATENTSCHRIFT

(11) **EP 3 625 511 B1**
(45) Veröffentlichungstag und Bekanntmachung des Hinweises auf die Patenterteilung: **28.12.2022**
(21) Anmeldenummer: 18726053.4
(22) Anmeldetag: 11.05.2018
(51) Int. Cl.: F28F 7/02

(54) **VORRICHTUNG ZUM KÜHLEN, WÄRMEN ODER WÄRMEÜBERTRAGEN UND VERFAHREN ZU DEREN HERSTELLUNG**
DEVICE FOR COOLING, HEATING OR TRANSFERRING HEAT
DISPOSITIF DE REFROIDISSEMENT, CHAUFFAGE OU TRANSFERT THERMIQUE

(30) Priorität: 16.05.2017 DE 102017004671
(43) Veröffentlichungstag der Anmeldung: 25.03.2020
(73) Patentinhaber: Degner GmbH&Co. KG, 31061 Alfeld (DE)
(72) Erfinder: DEGNER, Helmut, 31061 Alfeld (DE); OSTAPENKO, Wladimir, 31061 Alfeld (DE)
(74) Vertreter: Callies, Rainer Michael
(86) Internationale Anmeldenummer: PCT/EP2018/025137
(87) Internationale Veröffentlichungsnummer: WO 2018/210455

(56) Entgegenhaltungen:
- EP-A2- 0 658 737
- WO-A1-2015/110578
- WO-A1-2015/110578
- DE-A1- 4 017 749
- DE-A1- 4 017 749
- DE-A1- 10 305 031
- DE-A1-102005 050 118
- JP-A- 2016 004 806
- US-A1- 2006 194 159
- US-A1- 2016 290 738

## Beschreibung

Die Erfindung betrifft eine Vorrichtung nach dem Oberbegriff des Anspruchs 1. Bei der Vorrichtung kann es sich insbesondere um eine Kühlvorrichtung zum Kühlen eines Gegenstandes oder eine Heizvorrichtung zum Erwärmen eines Gegenstandes handeln. Insbesondere kann die Vorrichtung eine Kühlplatte oder eine Wärme- bzw. Heizplatte sein. Ferner kann es sich bei einer solchen Vorrichtung auch um einen Wärmeübertrager handeln, wobei Wärmeübertrager auch als Wärmeaustauscher bzw. Wärmetauscher bezeichnet werden. Ferner bezieht sich die Erfindung auf ein Verfahren zur Herstellung einer solchen Vorrichtung.

Ein Wärmeübertrager, der übereinander gestapelte Platten aufweist, die einen ersten und einen zweiten internen Fluidpfad bilden, ist in der DE 102012202276 A1 beschrieben. Die Platten und zwischen den Platten angeordnete lamellenartige Turbulatoren, die für eine turbulente Strömung sorgen, sind miteinander verlötet. Lötstellen haben jedoch den Nachteil, dass sie defekt werden können, wodurch sich dann die unterschiedlichen Medien vermischen können oder auch eine Verunreinigung der Medien stattfinden kann. Bei einteiligen bzw. einstückigen Wärmeübertragern, die man auch als Monoblock-Wärmeübertrager bezeichnen kann, tritt dieses Problem nicht auf.

In der WO 2009/136277 A1 ist eine Kühlplatte zur Aufnahme von Wärme offenbart. Bei dieser Kühlplatte handelt es sich um einen Monoblock mit einer Einlassöffnung und einer Auslassöffnung zum Durchfluss eines Kühlfluids. Dieses Fluid fließt durch ein Kanalsystem mit Kanälen, die als Sacklöcher ausgebildet sind. Die Sacklöcher sind zwar teilweise in einem rechten Winkel zueinander angeordnet, die Strömung des Fluids wird jedoch im Wesentlichen laminar sein. Die Enden der Sacklöcher sind mit Stopfen verschlossen.

In der WO 2017/053184 A1 ist ein Monoblock-Wärmeübertrager beschrieben, zu dessen Herstellung ein additives Fertigungsverfahren vorgesehen ist, bei dem insbesondere ein 3D-Drucker verwendet werden kann. Ein weiterer Monoblock-Wärmeübertrager, dessen Herstellung ebenfalls durch solch ein Verfahren vorgesehen ist, ist in der WO 2016/057443 A1 beschrieben. Zur Erzeugung von turbulenter Strömung von Flüssigkeit, die zur Wärmeübertragung verwendet wird, ist vorgesehen, dass diese Flüssigkeit in einem ZickZack- oder Sägezahn-Muster fließt.

In der WO 2011/115883 A2 ist ein einstückiger Wärmeübertrager offenbart, der Kanalsysteme für verschiedene Flüssigkeiten mit Kanälen aufweist, die verzweigen und Durchmesser mit über ihre Länge veränderlicher Größe aufweisen. Die Kanäle bzw. Kanalsysteme sind an zwei Enden offen. Zur Herstellung des Wärmetauschers ist eine Schichtenherstellung, beispielsweise durch ein selektives Laser-Schmelzen, vorgesehen. Bei diesen Kanalsystemen ist von einer laminaren Strömung der Flüssigkeiten auszugehen. Turbulatoren sind nicht vorgesehen.

Ein Wärmeübertrager mit wabenförmigen Strömungsspalten ist in der DE 10305031 A1 beschrieben. Der Wärmeübertrager weist ein Wärmeübertragungselement auf, das aus einer Aluminiumlegierung im Strangpressverfahren hergestellt ist. Die Strömungsspalte weisen Turbulenzerzeuger auf, bei denen es sich um ein kreuz- oder doppelkreuzförmiges Einsatzelement handeln kann. Die Enden des Wärmeübertragungselements sind jeweils mit einem Endstück verbunden, die die Strömungskanäle vorgeben und Ein- und Auslassöffnungen aufweisen.

Die DE 10 2005 050 118 A1 beschreibt eine Anordnung zur Temperierung eines metallischen Körpers, die mittels eines selektiven Laserschmelzverfahrens hergestellt wird. Sie kann zwar eine Strömungskammer mit sich kreuzenden Zweigkanälen aufweisen, wobei sich an Kreuzungsstellen Säulen mit einem parallelogramm-förmigen Querschnitt befinden. Da diese Säulen jedoch hohl sind und das Zweigkanalsystem nicht aus einem massiven Blockelement mittels Bohren hergestellt ist, ist die Druckbeständigkeit dieser bekannten Temperieranordnung relativ niedrig.

Eine gattungsgemäße Vorrichtung gemäß dem Oberbegriff von Anspruch 1, ist in der EP 0658737 A2 beschrieben. Dabei handelt es sich um einen Wärmeübertrager, der einen Monoblock aus keramischem Material mit wenigstens zwei Kanalsystemen aufweist. Die Kanäle des einen Kanalsystems können sich mit den Kanälen des anderen Kanalsystems von der Anordnung her kreuzen. Eine Vermischung der Medien ist aufgrund der geometrischen Anordnung der Kanäle nicht möglich. Bei den Kanälen handelt es sich um Bohrungen, die an beiden Enden offen sind, wobei zum Verschließen eine Platte vorgesehen ist. Die Kanalsysteme weisen einen Querschnitt in Form eines länglichen Schlitzes auf, wobei durch die Bohrungen Wände mit sich überlappenden Kreisbögen ausgebildet sind. Turbulatoren sind bei diesem Wärmtauscherblock nicht vorgesehen.

Der Erfindung liegt die Aufgabe zugrunde, eine gattungsgemäße Vorrichtung zur Verfügung zu stellen, bei der sehr effektiv eine turbulente Strömung des Mediums erzeugt wird und die eine hohe Druckfestigkeit aufweist. Ferner ist es eine Aufgabe der Erfindung, ein Verfahren zur Herstellung einer solchen Vorrichtung anzugeben.

Diese Aufgabe wird durch die Merkmale des Anspruchs 1 gelöst. Die Vorrichtung weist mindestens eine Strömungskammer auf, die zum Durchfluss eines Mediums vorgesehen ist und eine Einlassöffnung sowie eine Auslassöffnung besitzt. Die Strömungskammer ist in einem einstückigen Blockelement, das auch als Monoblockelement bezeichnet werden kann, angeordnet. Sie weist zumindest teilweise eine wärmedurchlässige Wandung auf, so dass durch diese Wandung hindurch das Medium thermische Energie bzw. Wärmeenergie aufnehmen oder abgeben kann. Bei dem Medium kann es sich insbesondere um Gas oder Flüssigkeit handeln. Die Strömungskammer ist aus mehreren ersten Kanälen und mehreren zweiten Kanälen, die in dem Blockelement angeordnet sind, gebildet. Die ersten Kanäle sind voneinander beabstandet und verlaufen gerade und zueinander parallel. Auch die zweiten Kanäle sind voneinander beabstandet und verlaufen gerade und zueinander parallel. Sowohl die ersten als auch die zweiten Kanäle weisen jeweils zwei Enden auf und sind zumindest an einem der beiden Enden geschlossen.

Die zweiten Kanäle verlaufen derartig in einem Winkel zu den ersten Kanälen, dass sich die ersten und die zweiten Kanäle kreuzen. Zwischen vier Kreuzungsstellen von zwei benachbarten ersten und zwei benachbarten zweiten Kanälen befinden sich innerhalb der von den Kanälen gebildeten Strömungskammer Stützpfeiler. Diese Stützpfeiler weisen über ihre Höhe bzw. Länge einen Querschnitt von der Form eines Parallelogramms auf. Diese Form kann man auch als Rhomboid bzw. rautenähnlich bezeichnen. Da die Strömungskammer aus einer Reihe von sich kreuzenden geraden Kanälen, die sich an ihren Kreuzungsstellen durchdringen, gebildet ist, könnte sie auch als Kanalsystem bezeichnet werden. Die Stützpfeiler werden hier als Teil der jeweiligen Strömungskammer bezeichnet. Die Strömungskammer zeichnet sich somit dadurch aus, dass innerhalb der Strömungskammer abgesehen von Kammer-Randbereichen eine Mehrzahl von solchen Stützpfeilern angeordnet ist, wobei sich die Stützpfeiler zwischen zwei einander gegenüberliegenden Wandungen der Strömungskammer erstrecken.

Die Vielzahl von regelmäßig angeordneten Stützpfeilern sorgt dafür, dass die Strömung des Mediums durch die Strömungskammer hindurch im Regelfall nicht laminar, sondern turbulent ist. Ferner erlauben die Stützpfeiler eine hohe Druckbeständigkeit des Blockelements und damit der Vorrichtung. Die Druckbeständigkeit wird durch die große Anzahl von Stützflächen bewirkt, welche durch die parallelogramm-förmigen Querschnitte der Stützpfeiler gegeben sind. Die Stützflächen stützen gegenüberliegende Wandungen der Strömungskammer gegeneinander ab bzw. halten diese zusammen. Die erfindungsgemäße Vorrichtung kann beispielweise eine Druckbeständigkeit von 150 bar aufweisen. Aufgrund dieser hohen Druckbeständigkeit kann die Strömungsgeschwindigkeit des Mediums relativ hoch sein, wodurch eher eine turbulente Strömung eintritt, als bei einer niedrigen Geschwindigkeit.

Die ersten Kanäle sind über ihre Länge, abgesehen von ihren Endbereichen, in ihrem Querschnitt gleichförmig, wenn man die Kanäle für sich betrachtet und die Stellen der Kreuzung mit den zweiten Kanälen außer Acht lässt. Mit anderen Worten ist damit gemeint, dass die Kanäle, die als Bohrung hergestellt sind (siehe unten), über ihre Länge denselben Durchmesser aufweisen. Dies gilt auch entsprechend für die zweiten Kanäle. Vorzugsweise sind auch die ersten und zweiten Kanäle im Vergleich zueinander in ihrem Querschnitt gleich. Dann sind auch die Querschnittsflächen der Stützpfeiler gleichförmig, abgesehen von Stützpfeilern an den Rändern der Strömungskammer. Die Durchmesser der Kanäle beeinflussen die physikalischen Daten der Vorrichtung wie Wärmeleistung und Druckabfall in der Strömungskammer.

Wenn die Abstände zwischen jeweils benachbarten ersten Kanälen und die Abstände zwischen jeweils benachbarten zweiten Kanälen gleich sind und auch die Abstände der ersten und der zweiten Kanäle gleich sind, weisen die Stützpfeiler einen rautenförmigen Querschnitt auf. Es ist dann eine besonders hohe Regelmäßigkeit in der Struktur der Strömungskammer gegeben, was günstig ist für eine hohe Druckbeständigkeit der Strömungskammer und somit auch für die Erzeugung von turbulenter Strömung.

Es kann vorgesehen sein, dass jeweils einer der ersten Kanäle und einer der zweiten Kanäle an einem ihrer jeweils beiden Enden eine gemeinsame Kanalöffnung aufweisen und diese Kanalöffnung in einer Seitenwand des Blockelements angeordnet ist und eine Seitenwandöffnung darstellt. Die Vorrichtung weist dann mindestens ein Verschlussmittel auf, mit dem die Seitenwandöffnungen dichtend verschlossen werden können. Vorzugsweise ist vorgesehen, dass sich all diese gemeinsamen Kanalöffnungen einer Strömungskammer in derselben Seitenwand des Blockelements befinden.

Die Seitenwandöffnungen erlauben auf einfache Art und Weise eine Reinigung und eine Sichtkontrolle der jeweiligen Strömungskammer und damit der erfindungsgemäßen Vorrichtung. Ein weiterer, sehr wesentlicher Vorteil der Seitenwandöffnungen besteht darin, dass sie es ermöglichen, dass die ersten und zweiten Kanäle eine Bohrung sind. Dies bedeutet, dass die Kanäle durch Bohren mittels eines rotierenden Werkzeugs oder aber auch durch ein Bohrerodieren oder Laserbohren hergestellt worden sind bzw. hergestellt werden. Insbesondere die Herstellung der Kanäle mittels eines rotierenden Werkzeugs ist relativ einfach möglich im Vergleich zu der Herstellung eines Blockelements mit Kanälen, die an ihren beiden Enden geschlossen sind, wobei nämlich ein additives Herstellungsverfahren bzw. ein 3D-Drucken erforderlich ist. Die Herstellung der Kanäle mittels eines rotierenden Werkzeugs ist im Vergleich zu der Herstellung von an beiden Enden geschlossenen Kanälen mittels eines additiven Fertigungsverfahrens deutlich weniger aufwändig und relativ kostengünstig. Andererseits bleiben aber die Vorteile, die durch die Verwendung eines einstückigen Blockelements gegeben sind, erhalten (siehe oben), nämlich dass keine Lötstellen, Schweißnähte oder Dichtungen zwischen Bauteilen eines Strömungskammersystems gegeben sind. Damit ist ein Vermischen von verschiedenen Medien, wenn mehrere Kammern vorgesehen sind (siehe unten) nicht möglich. Das Entfallen von Dichtungen, insbesondere auch Doppeltdichtungen, in Bezug auf die Anordnung von Strömungskammern bedeutet, dass keine Dichtungsnuten, kein Ankleben oder Positionieren von Dichtungen erforderlich ist und Spannkräfte entfallen. Ferner ist das Blockelement gut in der Lage, eine innere Bewegung in Form von Ausdehnung oder Zusammenziehung aufgrund von Temperaturveränderungen auszuführen.

Aufgrund der kreuzweisen Anordnung der ersten und zweiten Kanäle können in den beiden Endbereichen der Anordnung der Seitenwandöffnungen auch solche vorhanden sein, die keine gemeinsame Seitenwandöffnung, sondern nur die Kanalöffnung eines ersten oder eines zweiten Kanals darstellen.

Die ersten und zweiten Kanäle sind im Querschnitt kreisrund. Dadurch weisen die Stützpfeiler zwar gewölbte Seitenflächen auf, über ihre Höhe sind sie im Querschnitt jedoch parallelogramm-förmig.

Es kann vorgesehen sein, dass jede Seitenwandöffnung ein Gewinde aufweist, das zur Befestigung einer Verschlussschraube dient, um die Seitenwandöffnung dichtend zu verschließen. Die Verschlussschraube kann eine Innensechskantschraube mit einer Dichtung, wie einem O-Ring, sein. Aufgrund der erfindungsgemäßen Anordnung der ersten und zweiten Kanäle können mit einer Verschlussschraube gleichzeitig ein erster und ein zweiter Kanal verschlossen werden. Die Verschlussschrauben können Normteile sein und bieten eine zuverlässige Abdichtung. Falls erforderlich, können sie schnell ersetzt werden. Als Dichtungsmaterialien für die Verschlussschrauben können beispielsweise Nitrilkautschuk (NBR), Ethylen-Propylen-Dien-Kautschuke (EPDM) oder Viton verwendet werden. Verschlussschrauben bieten eine zuverlässige Abdichtung und sorgen für eine gleichmäßige Kraftverteilung auf eine Dichtung. Ferner können sie eine oben beschrieben innere Bewegung des Blockelements gut mitvollziehen.

Die Seitenwandöffnungen können aufgrund ihrer schrägen Anordnung zu der Längsachse eines im Querschnitt kreisrunden Kanals im Herstellungsprozess zunächst etwas elliptisch sein. Es kann daher vorgesehen sein, dass diese elliptische Form vor dem Vorgang des Schneidens des Gewindes zu einer kreisrunden Form aufgebohrt wird.

Die Seitenwandöffnungen können auch durch eine Abdeckung in Form einer Verschlussleiste oder Verschlussplatte verschlossen werden, die alle Kanalöffnungen einer Strömungskammer oder alle Kanalöffnungen in einer Seitenwand gemeinsam dichtend abdeckt.

Die ersten und zweiten Kanäle können sich in einem Winkel von weniger als 90 Grad kreuzen, vorzugsweise in einem Winkel von 45 bis 75 Grad und noch bevorzugter in einem Winkel von 55 bis 65 Grad.

Insbesondere kann vorgesehen sein, dass die ersten und zweiten Kanäle zu der Seitenwand des Blockelements betragsmäßig denselben Winkel aufweisen, der im Folgenden auch als Anstellwinkel bezeichnet wird. Durch eine solche Symmetrie der Anstellwinkel zur Seitenwand kann eine besonders hohe Regelmäßigkeit der Strömungskammer erreicht werden. Der Anstellwinkel beeinflusst ebenfalls die physikalischen Daten der Vorrichtung wie Wärmeleistung und Druckabfall in der Strömungskammer.

Die erfindungsgemäße Vorrichtung kann eine Strömungskammer aufweisen, die zum Durchfluss eines Wärme abgebenden Mediums vorgesehen ist, und ferner eine Strömungskammer, die zum Durchfluss eines Wärme aufnehmenden Mediums vorgesehen ist. Die jeweilige wärmedurchlässige Wandung der Strömungskammern ist dann eine gemeinsame Wandung, die die beiden Strömungskammern voneinander trennt. Statt des obigen Begriffs "Wärme" könnte auch der Begriff "Wärmemenge" verwendet werden. Bei dieser Ausführungsform der erfindungsgemäßen Vorrichtung handelt es sich um einen Wärmeübertrager. Wie oben beschrieben, ist ein Vermischen der verschiedenen Medien nicht möglich, aufgrund der erfindungsgemäßen Anordnung der Strömungskammern in einem einstückigen bzw. massiven Blockelement. Die oben beschriebene hohe Druckbeständigkeit der erfindungsgemäßen Vorrichtung erlaubt bei der Ausführungsform eines Wärmeübertragers, dass ein hoher Systemdruck innerhalb der einen Strömungskammer und ein deutlich niedrigerer Systemdruck innerhalb einer benachbarten Strömungskammer bestehen kann.

Vorzugsweise sind die beiden Strömungskammern so angeordnet, dass jeweils ein Stützpfeiler der ersten Strömungskammer und ein Stützpfeiler der zweiten Strömungskammer deckungsgleich angeordnet sind. Dies bedeutet, dass die zweite Strömungskammer quasi um 180 Grad gedreht über der ersten Strömungskammer angeordnet ist, so dass die Stützpfeiler genau übereinander angeordnet sind. Auf diese Weise ist ein sehr robuster Zusammenhalt des Blockelements gegeben.

Selbstverständlich können mehrere Strömungskammern zum Durchfluss des Wärme abgebenden Mediums und mehrere Strömungskammern zum Durchfluss des Wärme aufnehmenden Mediums vorgesehen sein, wobei die Strömungskammern alternierend angeordnet sind.

Die Wärmeübertragung kann dadurch besonders effektiv sein, dass die Einlassöffnungen und die Auslassöffnungen der mindestens zwei Strömungskammern so angeordnet sind, dass das Wärme abgebende Medium und das Wärme aufnehmende Medium im Gegenstrom zueinander durch die Strömungskammern fließen. Vorzugsweise weisen alle Strömungskammern für das Wärme abgebende Medium und alle Strömungskammern für das Wärme aufnehmende Medium jeweils eine gemeinsame Einlassöffnung und eine gemeinsame Auslassöffnung auf.

Vorzugsweise ist vorgesehen, dass alle Kanalöffnungen der mindestens einen Strömungskammer für Wärme abgebendes Medium in derselben Seitenwand des Blockelements und alle Kanalöffnungen der mindestens einen Strömungskammer für Wärme aufnehmendes Medium in einer gegenüberliegenden Seitenwand des Blockelements angeordnet sind. Auf diese Weise können zwei benachbarte Strömungskammern relativ dicht aneinander liegen bzw. eine relativ dünne Wandung aufweisen, die die beiden Kammern voneinander trennt. Auf diese Weise können eine effektive Wärmeübertragung und eine kompakte Bauweise des Blockelements erreicht werden.

Strömungskammern, die für unterschiedliche Medien vorgesehen sind, können unterschiedliche Querschnittsflächen haben. Unterschiedliche Querschnittsflächen können dadurch auf einfache Weise erzielt werden, dass die Durchmesser der Kanäle im Vergleich zweier Strömungskammern zueinander unterschiedlich gewählt werden. Dabei können die ersten und zweiten Kanäle jeweils einer selben Strömungskammer gleiche Querschnitte aufweisen. Insbesondere können auf diese Weise die Strömungskammern auch in Abhängigkeit von den unterschiedlichen Medien unterschiedliche Volumina aufweisen. Dies ist sinnvoll, da unterschiedliche Medien regelmäßig unterschiedliche Viskositäten haben.

An zwei Stirnseiten kann das Blockelement jeweils ein oder mehrere Gewinde aufweisen, die zur Befestigung des Blockelements an einem anderen Bauteil dienen.

Als Material, aus dem das Blockelement hergestellt ist, sind verschiedene Materialien möglich. Insbesondere kann das Blockelement aus einer Aluminium-Legierung hergestellt sein. Sie ist kostengünstig und eignet sich gut für eine Herstellung der Kanäle durch ein rotierendes Werkzeug. Es können eine Passivierung, Beschichtung und/oder Oberflächenbehandlung des Blockelements vorgesehen sein, und zwar sowohl außen als auch innen.

Die Aufgabe hinsichtlich des Verfahrens wird durch Anspruch 10 gelöst. Die im Zusammenhang mit dem Verfahren gegebenen Vorteile sind oben beschrieben.

Im Folgenden wird die Erfindung anhand eines Ausführungsbeispiels näher erläutert, wobei auf die Figuren Bezug genommen wird. Es zeigen:
Fig. 1 eine perspektivische Ansicht einer erfindungsgemäßen Vorrichtung, bei der es sich um einen Wärmeübertrager handelt,
Fig. 2a eine Querschnittsfläche einer Strömungskammer des Wärmeübertragers der Fig. 1,
Fig. 2b eine Seitenansicht der Strömungskammer der Fig. 2a, bevor gemeinsame Kanalöffnungen mit Gewinden versehen worden sind,
Fig. 3 einen Ausschnitt aus der Querschnittsfläche der Fig. 2a,
Fig. 4a eine rechte Seitenansicht eines einstückigen Blockelements des Wärmeübertragers der Fig. 1,
Fig. 4b eine linke Seitenansicht des einstückigen Blockelements des Wärmeübertragers der Fig. 1,
Fig. 5 eine Draufsicht auf das Blockelement der Fig. 1, wobei die Anordnung der Strömungskammern dargestellt ist,
Fig. 6 eine Schnittansicht entlang der Schnittlinie VI-VI in Fig. 5,
Fig. 7 eine Schnittansicht entlang der Schnittlinie VII-VII der Fig. 5,
Fig. 8 einen Teilbereich C aus Fig. 5.

In den Figuren sind teilweise gleiche Merkmale mit gleichen Bezugszeichen bezeichnet. Der Wärmeübertrager ist mit dem Bezugszeichen 1 bezeichnet und weist ein einstückiges Aluminium-Blockelement 2 auf, das vorzugsweise aus AlMgSi1 hergestellt ist und eine gute Leitfähigkeit besitzt. Das Blockelement 2 besitzt eine Einlassöffnung 3 und eine Auslassöffnung 4 für ein erstes Medium, und ferner eine Einlassöffnung 5 sowie eine Auslassöffnung 6 für ein zweites Medium. Bei den Medien kann es sich insbesondere um eine Flüssigkeit oder ein Gas handeln. Ferner weist der Wärmeübertrager 1 vier Einschrauber 8 auf, die mittels eines Gewindes 7 in die Öffnungen 3 bis 6, die ein entsprechendes Innengewinde 9 aufweisen, unter Verwendung einer Dichtung (nicht gezeigt) eingeschraubt werden. Die Einschrauber 8 besitzen ferner ein Außengewinde 10, um Schläuche für die Medien anzuschließen.

Das Blockelement 2 weist insgesamt sechs übereinander angeordnete Strömungskammern 20 und 20' auf, von denen drei zum Durchfluss des ersten Mediums und drei zum Durchfluss des zweiten Mediums vorgesehen sind. Die Strömungskammern 20, 20' sind alternierend angeordnet, so dass jeweils eine Strömungskammer 20 für das erste Medium und eine Strömungskammer 20' für das zweite Medium durch eine gemeinsame Wandung voreinander getrennt sind.

Jede Strömungskammer 20 weist eine Mehrzahl von Kanalöffnungen 12 und jede Strömungskammer 20' eine Mehrzahl von Kanalöffnungen 12'auf, die sich jeweils in einer der beiden Seitenwände 13 und 13' des Blockelements 2 befinden. Da die Strömungskammern 20, 20' parallel zu einer Oberfläche 14 des Blockelements 2 angeordnet sind, gehört jeweils eine horizontale Reihe von Kanalöffnungen 12, 12' zu einer der Strömungskammern 20, 20'.

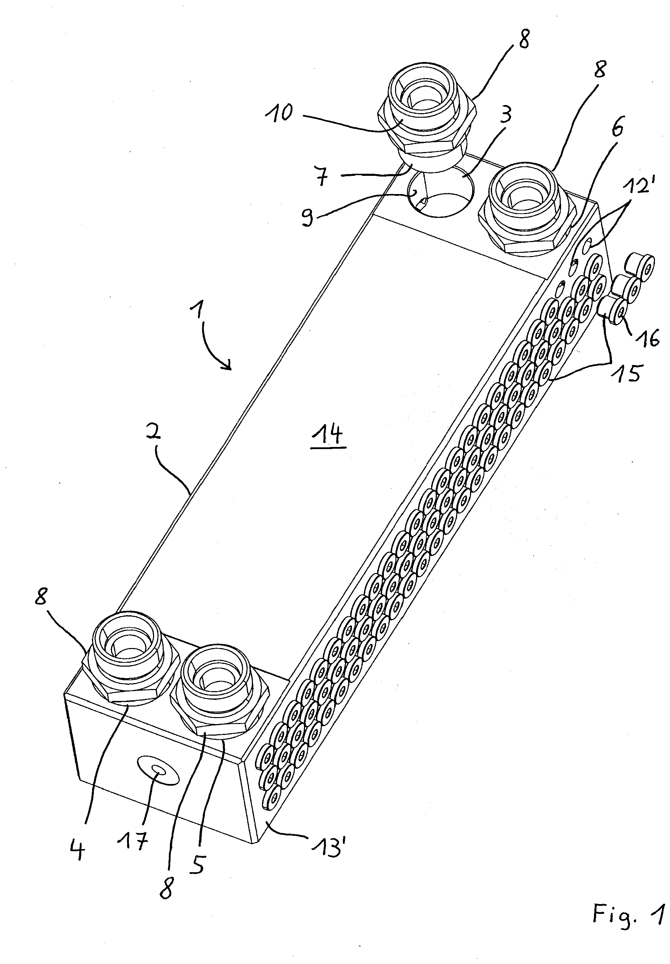

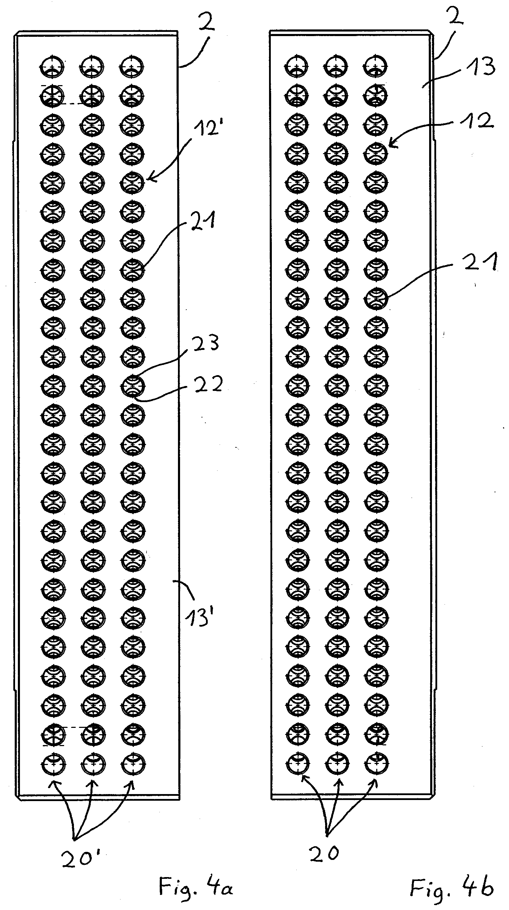

In Fig. 4a sind alle Kanalöffnungen 12' in der rechten Seitenwand 13' zu sehen, und in der Fig. 4b alle Kanalöffnungen 12 in der linken Seitenwand 13. Die Kanalöffnungen 12 gehören zu den Strömungskammern 20 des ersten Mediums und die Kanalöffnungen 12' zu den Strömungskammern 20' des zweiten Mediums. In Fig. 1 sind, abgesehen von dreien, alle Kanalöffnungen 12' durch Verschlussschrauben, die einen O-Ring als Dichtung und einen Innensechskantkopf aufweisen, verschlossen. Für diesen Zweck weist jede Kanalöffnung 12, 12' ein Gewinde auf.

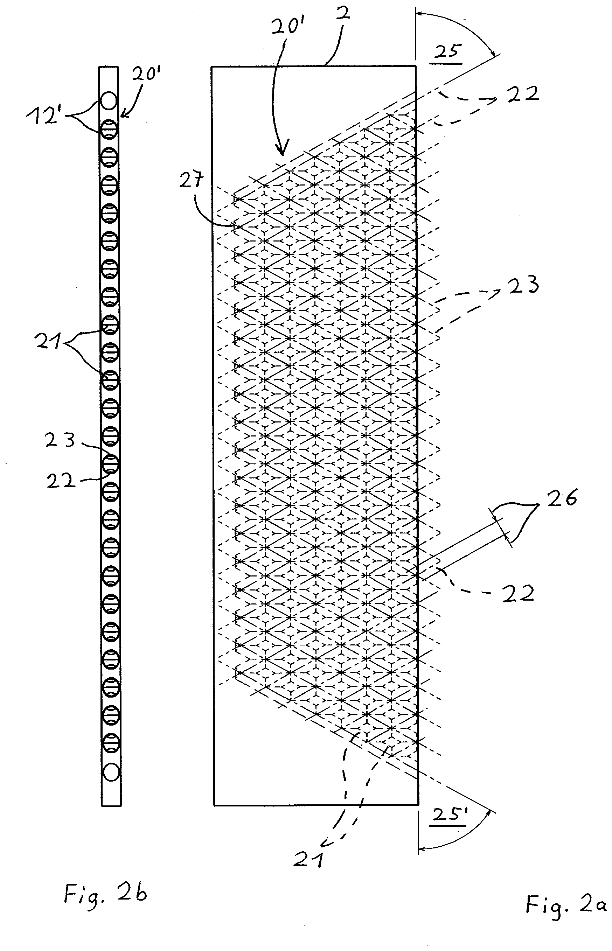

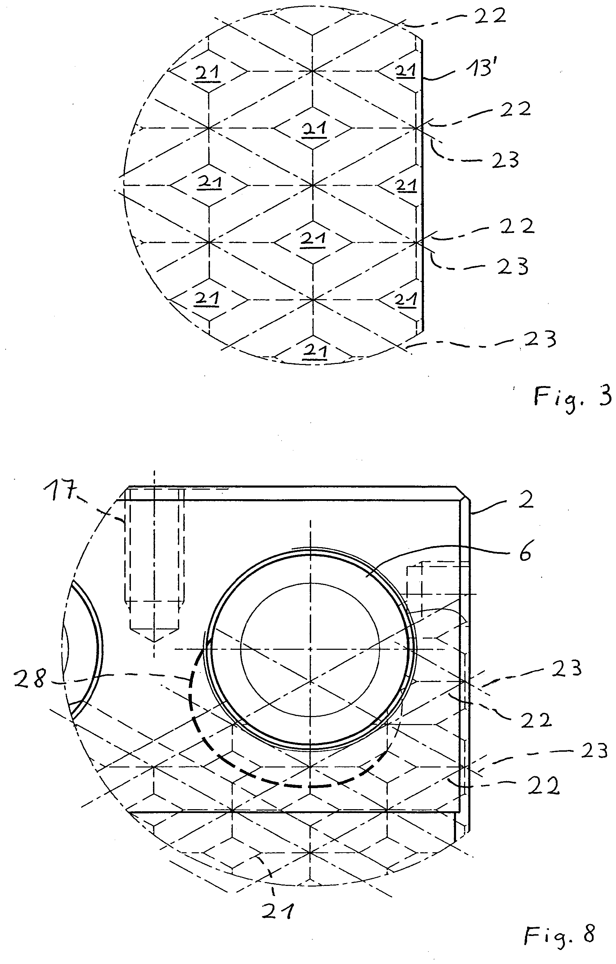

An beiden Stirnseiten besitzt das Blockelement 2 ein Anschlussgewinde 17 zur Befestigung des Wärmeübertragers 1 innerhalb einer Baugruppe. In den Fig. 2a und 2b ist eine Strömungskammer 20' des zweiten Mediums gezeigt. Ein Ausschnitt dieser Querschnittsfläche ist in Fig. 3 dargestellt. Es ist eine Vielzahl von Stützpfeilern 21 zu sehen, die einen rautenförmigen Querschnitt aufweisen. Gebildet sind die Stützpfeiler 21 durch eine Vielzahl von kreisrunden Bohrungen, die erste Kanäle 22 darstellen, und eine Vielzahl von kreisrunden Bohrungen, die zweite Kanäle 23 darstellen. In Fig. 3 sind die Kanäle 22 durch gestrichelte Linien dargestellt, die entlang der Kanallängsrichtung verlaufen. Aufgrund des kreisrunden Querschnitts des jeweiligen Kanals 22 verläuft entlang der gestrichelten Linie die tiefstliegende Erstreckung des Kanals 22, wobei Entsprechendes für die zweiten Kanäle 23 gilt. Die ersten Kanäle 22 weisen einen positiven Anstellwinkel 25 mit der Seitenwand 13' und die zweiten Kanäle 23 einen betragsmäßig gleich großen negativen Anstellwinkel 25' mit der Seitenwand 13' auf. Die Pfeile 26 bezeichnen die Breite eines ersten Kanals 22.

Die ersten und zweiten Kanäle 22, 23 weisen Kanalöffnungen 12' auf, die in Fig. 2b zu sehen sind und bei denen es sich bis auf zwei äußere Kanalöffnungen um gemeinsame Kanalöffnungen handelt. In der Draufsicht gemäß Fig. 2b ist mittig ein im Querschnitt rautenförmiger Stützpfeiler 21 zu sehen. Die gegenüberliegenden Enden 27 der Kanäle 22, 23 sind geschlossen. In Fig. 2b befinden sich die Kanalöffnungen 12' noch in einem Zustand, bevor sie zu einer kreisrunden Form aufgebohrt und mit einem Gewinde versehen worden sind, und haben also noch eine etwas elliptische Form.

Entsprechend ist eine Strömungskammer 20 für das erste Medium strukturiert, wobei sie von der Anordnung her um 180 Grad gedreht unterhalb der Strömungskammer 20' und zwischen zwei Strömungskammern 20' angeordnet ist. Die jeweiligen Stützpfeiler 21 liegen deckungsgleich übereinander.

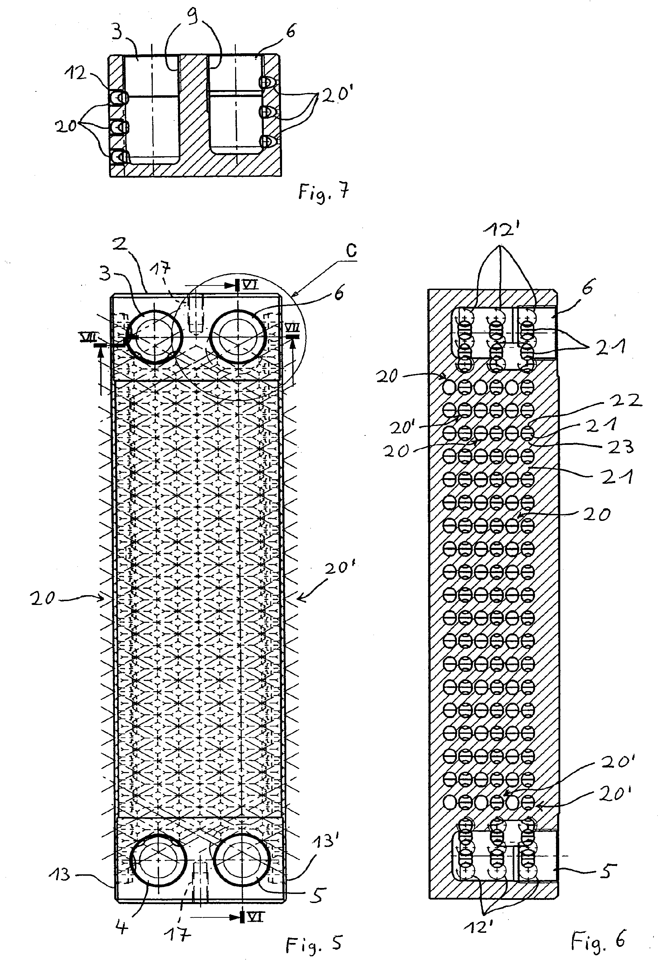

In Fig. 6 sind alle sechs Strömungskammern 20, 20' im Schnitt zu sehen, wobei sich zwischen leicht elliptischen Schnitten durch die Kanäle 22 bzw. 23, durch die hindurch auf Stützpfeiler 21 geschaut wird, ebenfalls Stützpfeiler 21 befinden, von denen einer beispielhaft mit dem Bezugszeichen 21 bezeichnet ist. Bei der Einlassöffnung 5 und der Auslassöffnung 6 sind Kanalöffnungen 12' zu sehen. Über die Einlassöffnung 5 fließt das zweite Medium in alle drei Strömungskammern 20' und aus diesen über die Auslassöffnung 6 wieder aus dem Blockelement 2 hinaus. Entsprechendes gilt für die Einlassöffnung 3 und die Auslassöffnung 4 betreffend das erste Medium, wobei die strömungsmäßige Verbindung zwischen den Strömungskammern 20' und der Auslassöffnung 6 sowie zwischen den Strömungskammern 20 und der Einlassöffnung 3 insbesondere in Fig. 7 zu sehen ist.

In Fig. 8 ist mit der Linie 28 eine Ausfräsung angedeutet, die dazu dient, die mittlere Strömungskammer 20' strömungsmäßig mit der Auslassöffnung 6 zu verbinden.

**Bezugszeichenliste:**

| | | | |
|---|---|---|---|
| 1 | Wärmeübertrager | 14 | Oberfläche von 2 |
| 2 | Blockelement | 15 | Verschlussschrauben |
| 3 | Einlassöffnung | 16 | Innensechskantkopf |
| 4 | Auslassöffnung | 17 | Anschlussgewinde |
| 5 | Einlassöffnung | 20, 20' | Strömungskammern |
| 6 | Auslassöffnung | 21 | Stützpfeiler |
| 7 | Gewinde | 22 | erste Kanäle |
| 8 | Einschrauber | 23 | zweite Kanäle |
| 9 | Innengewinde | 25, 25' | Anstellwinkel |
| 10 | Außengewinde | 26 | Pfeile |
| 12, 12' | Kanalöffnungen | 27 | geschlossene Enden von 22, 23 |
| 13, 13' | Seitenwände | 28 | Linie |

## Patentansprüche

1. Vorrichtung (1) mit mindestens einer eine Einlassöffnung (3,5) und eine Auslassöffnung (4,6) aufweisenden Strömungskammer (20, 20'), die zum Durchfluss eines Mediums vorgesehen ist, wobei die Strömungskammer (20, 20') in einem einstückigen Blockelement (2) angeordnet und zumindest teilweise durch eine wärmedurchlässige Wandung begrenzt ist, um eine durch das Medium stattfindende Aufnahme oder Abgabe thermischer Energie durch die Wandung hindurch zu bewirken,
**dadurch gekennzeichnet, dass** die mindestens eine Strömungskammer (20, 20') aus einer Mehrzahl von ersten voneinander beabstandeten Kanälen (22), die gerade und zueinander parallel verlaufen, und einer Mehrzahl von zweiten voneinander beabstandeten Kanälen (23), die gerade und zueinander parallel verlaufen, in dem Blockelement (2) gebildet ist, wobei die ersten und die zweiten Kanäle (22, 23) Bohrungen und im Querschnitt kreisrund sind und jeweils zwei Enden aufweisen und zumindest an einem (27) der beiden Enden geschlossen sind,
und dass die zweiten Kanäle (23) in einem Winkel zu den ersten Kanälen (22) angeordnet sind, so dass sich die ersten und die zweiten Kanäle kreuzen, wobei sich innerhalb der jeweiligen Strömungskammer (20, 20') zwischen den Kreuzungsstellen von zwei benachbarten ersten und zwei benachbarten zweiten Kanälen (22, 23) Stützpfeiler (21), die einen parallelogramm-förmigen Querschnitt aufweisen, befinden, und
dass die ersten und die zweiten Kanäle (22, 23) jeweils zwischen Bereichen ihrer beiden Enden einen gleichförmigen Querschnitt aufweisen.

2. Vorrichtung (1) nach Anspruch 1,
**dadurch gekennzeichnet, dass** erste und zweite Kanäle (22, 23) paarweise an einem ihrer jeweils beiden Enden, eine gemeinsame Kanalöffnung (12, 12') haben, die in einer Seitenwand (13) des Blockelements (2) als Seitenwandöffnung angeordnet ist, und
dass die Vorrichtung (1) mindestens ein Verschlussmittel (15) zum dichtenden Verschließen der Seitenwandöffnungen aufweist.

3. Vorrichtung (1) nach Anspruch 2,
**dadurch gekennzeichnet, dass** die Seitenwandöffnungen (12, 12') ein Gewinde aufweisen, das zur Aufnahme einer Verschlussschraube (15) als besagtes Verschlussmittel dient.

4. Vorrichtung (1) nach einem der vorhergehenden Ansprüche,
**dadurch gekennzeichnet, dass** die ersten und zweiten Kanäle (22, 23) sich in einem Winkel von weniger als 90 Grad, vorzugsweise in einem Winkel von 45 bis 75 Grad, noch bevorzugter in einem Winkel von 55 bis 65 Grad, kreuzen.

5. Vorrichtung (1) nach einem der vorhergehenden Ansprüche,
**dadurch gekennzeichnet, dass** die ersten und zweiten Kanäle (22, 23) betragsmäßig gleich große Winkel mit einer Seitenwand (13, 13') des Blockelements (2) bilden.

6. Vorrichtung (1) nach einem der vorhergehenden Ansprüche,
**dadurch gekennzeichnet, dass** sie mindestens eine besagte Strömungskammer (20) aufweist, die zum Durchfluss eines Wärme abgebenden Mediums vorgesehen ist, und mindestens eine besagte Strömungskammer (20') aufweist, die zum Durchfluss eines Wärme aufnehmenden Mediums vorgesehen ist, wobei die jeweilige wärmedurchlässige Wandung der Strömungskammern (20, 20') eine gemeinsame Wandung ist, die die beiden Strömungskammern (20, 20') voneinander trennt.

7. Vorrichtung (1) nach Anspruch 6,
**dadurch gekennzeichnet, dass** die beiden Strömungskammern (20, 20') so angeordnet sind, dass jeweils ein Stützpfeiler (21) der einen Strömungskammer (20) deckungsgleich über einem Stützpfeiler (21) der anderen Strömungskammer (20') angeordnet ist.

8. Vorrichtung (1) nach Anspruch 6 oder 7,
**dadurch gekennzeichnet, dass** alle gemeinsamen Kanalöffnungen (12) der mindestens einen Strömungskammer (20) für Wärme abgebendes Medium in derselben Seitenwand (13) des Blockelements (2) und alle gemeinsamen Kanalöffnungen (12') der mindestens einen Strömungskammer (20') für Wärme aufnehmendes Medium in einer gegenüberliegenden Seitenwand (13') des Blockelements (2) angeordnet sind.

9. Vorrichtung (1) nach einem der vorhergehenden Ansprüche,
**dadurch gekennzeichnet, dass** Strömungskammern (20, 20') im Vergleich zueinander Kanäle (22, 23) mit unterschiedlichen Durchmessern aufweisen.

10. Verfahren zur Herstellung einer Vorrichtung (1) nach Anspruch 2 und möglicherweise zusätzlich nach einem der Ansprüche 3 bis 9, wobei die ersten und zweiten Kanäle (22, 23) durch ein Bohren in das Blockelement (2) hergestellt werden.

## Claims

1. Device (1) comprising at least one flow chamber (20, 20') which has an inlet opening (3, 5) and an outlet opening (4, 6) and which is provided to allow the flow of a medium therethrough, wherein the flow chamber (20, 20') is arranged in a single-piece block element (2) and is defined at least partially by a diathermal wall in order to absorb or release thermal energy through the wall taking place through the medium,
**characterized in that** the at least one flow chamber (20, 20') is formed in the block element (2) from a plurality of first mutually spaced apart channels (22) which extend straight and in parallel with one another, and a plurality of second mutually spaced apart channels (23) which extend straight and in parallel with one another, wherein the first and the second channels (22, 23) are bores and have a circular cross-section and each have two ends and are closed at least at one (27) of the two ends,
and **in that** the second channels (23) are arranged at an angle to the first channels (22) such that the first and the second channels cross, wherein support pillars (21) which have a parallelogram-shaped cross-section are located within the respective flow chamber (20, 20') between the crossing points of two adjacent first and two adjacent second channels (22, 23),
and **in that** the first and the second channels (22, 23) each have a uniform cross-section between regions of their two ends.

2. Device (1) as claimed in claim 1,
**characterised in that** first and second channels (22, 23) have, in pairs at one of the two ends of each channel, a common channel opening (12, 12') which is arranged in a side wall (13) of the block element (2) as a side wall opening, and
**in that** the device (1) has at least one closure means (15) for closing the side wall openings in a sealing manner.

3. Device (1) as claimed in claim 2,
**characterised in that** the side wall openings (12, 12') have a thread which serves to receive a plug screw (16) as said closure means.

4. Device (1) as claimed in any one of the preceding claims,
**characterised in that** the first and second channels (22, 23) cross at an angle of less than 90 degrees, preferably at an angle of 45 to 75 degrees, more preferably at an angle of 55 to 65 degrees.

5. Device (1) as claimed in any one of the preceding claims,
**characterised in that** the first and second channels (22, 23) form angles of the same value with a side wall (13, 13') of the block element (2).

6. Device (1) as claimed in any one of the preceding claims,
**characterised in that** it has at least one said flow chamber (20) which is provided to allow the flow of a heat-releasing medium therethrough, and has at least one said flow chamber (20') which is provided to allow the flow of a heat-absorbing medium therethrough, wherein the respective diathermal wall of the flow chambers (20, 20') is a common wall which separates the two flow chambers (20, 20') from one another.

7. Device (1) as claimed in claim 6,
**characterised in that** the two flow chambers (20, 20') are arranged such that in each case a support pillar (21) of one flow chamber (20) is arranged congruently above a support pillar (21) of the other flow chamber (20').

8. Device (1) as claimed in claim 6 or 7,
**characterised in that** all common channel openings (12) of the at least one flow chamber (20) for a heat-releasing medium are arranged in the same side wall (13) of the block element (2) and all common channel openings (12') of the at least one flow chamber (20') for a heat-absorbing medium are arranged in an opposite side wall (13') of the block element (2).

9. Device (1) as claimed in any one of the preceding claims,
**characterised in that** flow chambers (20, 20'), when compared with one another, have channels (22, 23) with different diameters.

10. Method for producing a device (1) as claimed in claim 2 and possibly in addition as claimed in any one of claims 3 to 9, wherein the first and second channels (22, 23) are produced by boring into the block element (2).

## Revendications

1. Dispositif (1) comprenant au moins une chambre d'écoulement (20, 20') présentant une ouverture d'entrée (3, 5) et une ouverture de sortie (4, 6) et qui est prévue pour le passage d'un fluide, la chambre d'écoulement (20, 20') étant disposée dans un élément de bloc (2) en une seule pièce et étant délimitée au moins partiellement par une paroi qui laisse passer la chaleur afin de provoquer à travers la paroi une absorption ou une émission d'énergie thermique, effectuée par le fluide,
**caractérisé en ce que** ladite au moins une chambre d'écoulement (20, 20') est formée dans l'élément de bloc (2) à partir d'une pluralité de premiers canaux (22) espacés les uns des autres et qui s'étendent en ligne droite et en parallèle les uns aux autres, et d'une pluralité de deuxièmes canaux (23) espacés les uns des autres et qui s'étendent en ligne droite et en parallèle les uns aux autres, les premiers et les deuxièmes canaux (22, 23) étant des perçages et circulaires en section transversale, et présentant respectivement deux extrémités et étant fermés au moins au niveau de l'une (27) des deux extrémités,
et **en ce que** les deuxièmes canaux (23) sont disposés selon un angle par rapport aux premiers canaux (22) de sorte que les premiers et les deuxièmes canaux se croisent, dans lequel, à l'intérieur de la chambre d'écoulement (20, 20') respective, entre les points de croisement de deux premiers canaux voisins et de deux deuxièmes canaux voisins (22, 23), se trouvent des supports (21) qui présentent une section transversale en forme de parallélogramme, et
**en ce que** les premiers et les deuxièmes canaux (22, 23) présentent une section transversale homogène respectivement entre des zones de leurs deux extrémités.

2. Dispositif (1) selon la revendication 1, **caractérisé en ce que** des premiers et deuxièmes canaux (22, 23) ont par paires à l'une de leurs deux extrémités respectivement une ouverture de canal (12, 12') commune qui est disposée dans une paroi latérale (13) de l'élément de bloc (2) en tant qu'ouverture de paroi latérale, et
**en ce que** le dispositif (1) présente au moins un moyen de fermeture (15) pour la fermeture étanche des ouvertures de paroi latérale.

3. Dispositif (1) selon la revendication 2, **caractérisé en ce que** les ouvertures de paroi latérale (12, 12') présentent un taraudage qui sert à recevoir une vis de fermeture (15) comme ledit moyen de fermeture.

4. Dispositif (1) selon l'une quelconque des revendications précédentes, **caractérisé en ce que** les premiers et deuxièmes canaux (22, 23) se croisent selon un angle inférieur à 90 degrés, de préférence selon un angle de 45 à 75 degrés, de plus grande préférence selon un angle de 55 à 65 degrés.

5. Dispositif (1) selon l'une quelconque des revendications précédentes, **caractérisé en ce que** les premiers et deuxièmes canaux (22, 23) forment avec une paroi latérale (13, 13') de l'élément de bloc (2) des angles d'une dimension de valeur identique.

6. Dispositif (1) selon l'une quelconque des revendications précédentes, **caractérisé en ce qu'**il présente au moins une dite chambre d'écoulement (20) qui est prévue pour le passage d'un fluide émettant de la chaleur, et présente au moins une dite chambre d'écoulement (20') qui est prévue pour le passage d'un fluide absorbant de la chaleur, la paroi laissant passer la chaleur respective des chambres d'écoulement (20, 20') étant une paroi commune qui sépare les deux chambres d'écoulement (20, 20') l'une de l'autre.

7. Dispositif (1) selon la revendication 6, **caractérisé en ce que** les deux chambres d'écoulement (20, 20') sont disposées de telle sorte que respectivement un support (21) de ladite une chambre d'écoulement (20) est disposée de manière coïncidante au-dessus d'un support (21) de l'autre chambre d'écoulement (20').

8. Dispositif (1) selon la revendication 6 ou 7, **caractérisé en ce que** toutes les ouvertures de canal communes (12) de ladite au moins une chambre d'écoulement (20) pour un fluide émettant de la chaleur sont disposées dans la même paroi latérale (13) de l'élément de bloc (2), et toutes les ouvertures de canal communes (12') de ladite au moins une chambre d'écoulement (20') pour un fluide absorbant de la chaleur sont disposées dans une paroi latérale opposée (13') de l'élément de bloc (2).

9. Dispositif (1) selon l'une quelconque des revendications précédentes, **caractérisé en ce que** les chambres d'écoulement (20, 20') présentent en comparaison les unes avec les autres des canaux (22, 23) de différents diamètres.

10. Procédé de fabrication d'un dispositif (1) selon la revendication 2 et éventuellement en plus selon l'une quelconque des revendications 3 à 9, dans lequel les premiers et deuxièmes canaux (22, 23) sont fabriqués par un perçage dans l'élément de bloc (2).
